# EUROPÄISCHE PATENTSCHRIFT

(11) **EP 4 032 742 B1**
(45) Veröffentlichungstag und Bekanntmachung des Hinweises auf die Patenterteilung: **08.11.2023**
(21) Anmeldenummer: 21020629.8
(22) Anmeldetag: 09.12.2021
(51) Int. Cl.: B60L 53/14, B60L 53/31

(54) **VERFAHREN ZUM PRÜFEN EINES DC-ZÄHLERS IN EINER LADESÄULE UND PRÜFSTAND FÜR EINE LADESÄULE**
METHOD FOR TESTING A DC METER IN A CHARGING COLUMN AND TEST BENCH FOR A CHARGING COLUMN
PROCÉDÉ DE VÉRIFICATION D'UN COMPTEUR CC DANS UNE COLONNE DE CHARGE ET BANC D'ESSAI POUR UNE COLONNE DE CHARGE

(30) Priorität: 25.01.2021 DE 102021101529
(43) Veröffentlichungstag der Anmeldung: 27.07.2022
(73) Patentinhaber: Dr.Ing. h.c. F. Porsche Aktiengesellschaft, 70435 Stuttgart (DE)
(72) Erfinder: METZGER, Christian, 71732 Tamm (DE); MASSIERER, Timo, 71638 Ludwigsburg (DE); KÖHLER, David, 74321 Bietigheim-Bissingen (DE); SCHÖFFLER, Harald, 74626 Bretzfeld-Rappach (DE); STEINEL, Mario, 85276 Pfaffenhofen (DE); GAST, Marco, 76889 Klingenmünster (DE); ZHEBRAYTYS, Alex, 70191 Stuttgart (DE); MÖSER, Moritz, 70597 Stuttgart (DE)

(56) Entgegenhaltungen:
- DE-A1-102018 128 772
- DE-A1-102018 128 783
- US-A1- 2018 370 380

## Beschreibung

Die vorliegende Erfindung betrifft ein Verfahren zum Prüfen eines DC-Zählers in einer Ladesäule. Die vorliegende Erfindung betrifft darüber hinaus einen entsprechenden Prüfstand, ein entsprechendes Computerprogramm sowie ein entsprechendes Speichermedium.

### Stand der Technik

Marktübliche mit Gleichstrom (*direct current,* DC) betriebene Ladesäulen entsprechen internationalen Ladestandards wie CCS-1, CCS-2, GBIT oder CHAdeMO und unterstützen Ladeleistungen bis zu 350 kW, mit geringem Mehraufwand gar bis zu 475 kW. Um eine derart hohe Ladeleistung bereitzustellen, bedarf es Spannungen bis zu 1000 V und Stromstärken bis zu 500 A. In DC-Ladeverfahren nach dem Stand der Technik wird die resultierende Ladeenergie dem elektrischen Fahrzeug (*electric vehicle,* EV) regelmäßig durch ein Ladekabel (*electric vehicle supply equipment,* EVSE) zugeführt.

In zahlreichen Staaten unterliegen Ladesäulen dem Eichrecht, das zu ihrem Betrieb mitunter eine amtliche Konformitätsbewertung vorschreibt. Insbesondere der enthaltene DC-Verbrauchszähler (*DC meter*) muss vor seiner Auslieferung in der Komponenten- oder Systemproduktion eichrechtlich geprüft werden. Bei Nachrüstung oder Reparatur einer Ladesäule ist diese Prozedur zu wiederholen, um die Einhaltung der eichrechtlichen Vorschriften sicherzustellen. Im Zweifel hat die Prüfung hierzu im Beisein eines amtlichen Prüfers zu erfolgen.

DE 10 2018 128783 A beschreibt eine Messeinrichtung für eine Ladeeinrichtung zum Laden eines Fahrzeugs mit einem elektrischen Antrieb mit Gleichstrom, wobei die Ladeeinrichtung eine elektrische Verbindungseinrichtung zum Verbinden mit dem elektrischen Fahrzeug aufweist, die Messeinrichtung umfassend eine Strommesseinrichtung mit einem Shunt und einem Spannungsmesser zum Messen einer Spannung an dem Shunt zur Bestimmung eines Ladestroms durch einen ersten Stromleiter der Verbindungseinrichtung, und eine Spannungsmesseinrichtung zum Messen einer Ladespannung zwischen dem ersten Stromleiter und einem zweiten Stromleiter der Verbindungseinrichtung,
wobei die Messeinrichtung eine Leiterplatte aufweist, auf der die Strommesseinrichtung und die Spannungsmesseinrichtung angeordnet sind.

US2019360873AA beschreibt ein Verfahren zur Strom- und Spannungsmessung an einem DC-Ladekabel zum Zwecke der Temperaturüberwachung. DE102018128772A1 betrifft eine Schirmung zur Verbesserung der elektromagnetischen Verträglichkeit eines Strommesswiderstandes (*shunt*) für einen DC-Zähler in einer Ladesäule.

US2004169489AA offenbart ein anderweitiges Ladesystem mit integriertem DC-Zähler.

US2016325635AA erörtert ein fahrzeugseitiges Ladesystem bzw. Ladekabel mit integrierter Spannungs- und Strommessung.

US2019381907AA diskutiert ein Verfahren zur Spannungskompensation für Fahrzeug-Ladekabel insbesondere unter Einbezug des zu ladenden Fahrzeugs z. B. mit stochastischen Methoden.

US2020247256AA schlägt eine Methode zur Erkennung eines verschweißten Schaltschützes in einem Kraftfahrzeug sowie ein Batterieüberwachungssystem vor, welches die Batteriespannung und den Batteriestrom im Fahrzeug überwacht.

### Offenbarung der Erfindung

Die Erfindung stellt ein Verfahren zum Prüfen eines DC-Zählers in einer Ladesäule, einen entsprechenden Prüfstand, ein entsprechendes Computerprogramm und Speichermedium gemäß den unabhängigen Ansprüchen bereit.

Der vorgeschlagene Ansatz fußt hierbei auf der Erkenntnis, dass die Ladeleistung marktüblicher Ladesäulen hohe Anforderungen an einen herkömmlichen Prüfstand stellen würde. So würden sich Platzbedarf und Sicherheitsanforderungen eines solchen Prüfstandes bei Betriebsspannungen über 60 V DC und Strömen über 5 A sprunghaft erhöhen. Allein die Bereitstellung der benötigten Leistung für solch einen Prüfstand am Ende der Fertigungslinie (*end of line,* EOL) wäre angesichts der benötigten Leistungselektronik mit erheblichem Aufwand verbunden.

Ein Vorzug der Erfindung liegt vor diesem Hintergrund in der Schaffung eines für das Produktionsumfeld geeigneten Prüfkonzeptes mit möglichst geringem Platz-, Kosten- und Energiebedarf, welches sämtlichen Anforderungen sowohl des Eichrechts als auch der Betriebssicherheit genügt. Das somit ermöglichte automatisierte Testen von Ladesäulen mit vollständigem Fernzugriff auf die Testdaten vereinfacht die Fehleranalyse und Wartung in Abwesenheit der Eichbehörde.

Das präsentierte Messkonzept ermöglicht darüber hinaus die getrennte Bestimmung der Übergangswiderstände des Ladesäulensystems auf dem positiven und negativen Strompfad. Auch diese Bestimmung ist im Rahmen einer eichrechtlichen Prüfung unter Umständen erforderlich und gestattet es, Produktionsfehler an der Ladesäule zu erkennen, die den Widerstandswert des Systems verändern. Ohne eine erfindungsgemäße Aufteilung des Strom- und Spannungspfads wären für eine derartige Prüfung eine Stromquelle und -senke erforderlich, deren Leistung der größtmöglichen Ladeleistung der Ladesäule entspricht.

Weitere vorteilhafte Ausgestaltungen der Erfindung sind in den abhängigen Patentansprüchen angegeben.

### Kurze Beschreibung der Zeichnungen

Ausführungsbeispiele der Erfindung sind in den Zeichnungen dargestellt und werden im Folgenden näher beschrieben.
Figur 1 zeigt einen DC-Zähler in einer Schnellladesäule nach dem Stand der Technik.
Figur 2 zeigt das Messkonzept eines Hardware-in-the-loop-Prüfstands in einer ersten Ausführungsform.
Figur 3 zeigt das vereinfachte Schaltbild eines HiL-Prüfstands in einer zweiten Ausführungsform.
Figur 4 zeigt ein detailliertes Schaltbild des HiL-Prüfstands der zweiten Ausführungsform.
Figur 5 zeigt das vereinfachte Schaltbild eines alternativen Prüfstandes für Ladesäulen.

### Ausführungsformen der Erfindung

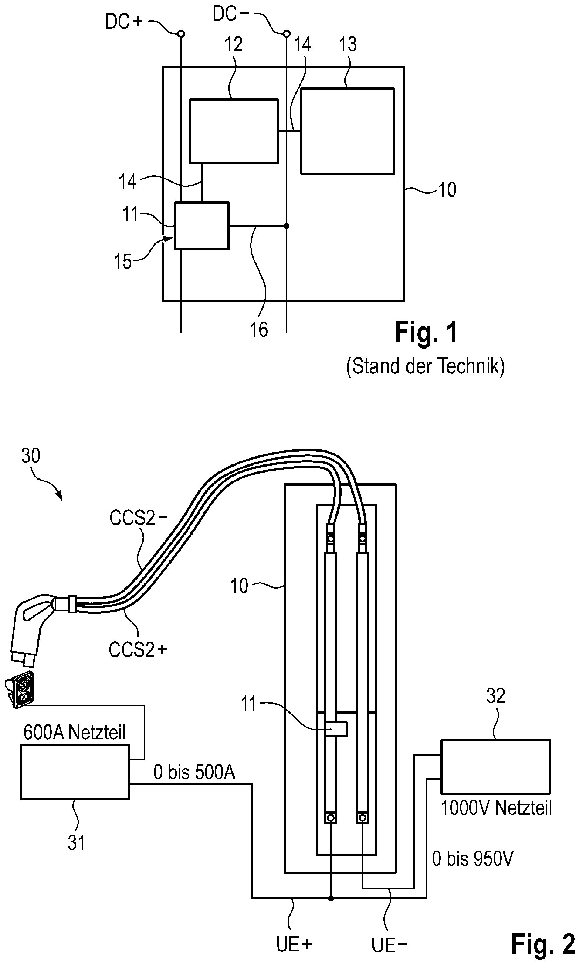

Figur 1 illustriert die Strom- und Spannungsmessung (15) in einer Ladesäule (10) des Typs "Porsche Turbo Charger" mit zwei stromführenden Kupferschienen (DC+, DC-). Die Messung des Stromes erfolgt durch die Sensoreinheit (11) eines DC-Zählers (11, 12) auf der positiven Kupferschiene (DC+), jene der Spannung mithilfe einer die Sensoreinheit (11) mit der negativen Schiene (DC-) verbindenden Leitung (16). Die solchermaßen erfassten Messwerte werden über eine Kommunikationseinrichtung (14) der Ladesäule (10) an die Steuereinheit (12) des DC-Zählers (11, 12) übermittelt, welche die derzeitige Ladeleistung durch Multiplizieren von Stromstärke und Spannung errechnet und einer übergeordneten Ladeablauf- und Kommunikationssteuerung (13) zur weiteren Auswertung und Verwendung zuführt.

Figur 2 verdeutlicht das entsprechende Messkonzept eines erfindungsgemäßen HiL-Prüfstandes (30) am Beispiel einer CCS2-Variante, in welchem Strom und Spannung über einen Anschluss an die Stromschienen zur Ladesäule (10) und von dort durch das Ladekabel (CCS2-, CCS2+) und eine CCS-Buchse zurück zum Prüfstand (30) geführt werden. Es sei bemerkt, dass die CCS1- und GB/T-Ladestandards analog unterstützt werden können. Auch eine Umschaltung zwischen CCS1 und CCS2 seitens des Prüfstandes (30) kommt in Betracht, ohne den Rahmen der Erfindung zu verlassen.

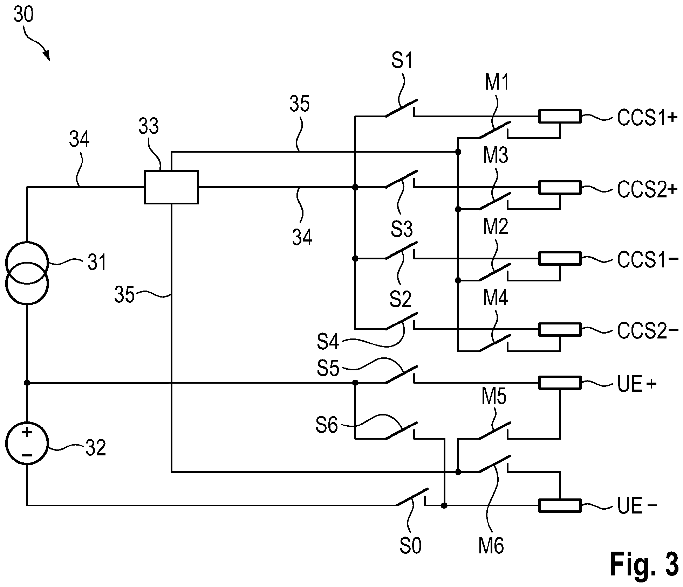

Figur 3 beleuchtet dieses Wirkprinzip anhand einer Variante, die sowohl den CCS1- als auch den CCS2-Ladestandard unterstützt. Auch hier werden Spannung und Strom für die Messung durch separate Quellen (31, 32) bereitgestellt. Der von der Stromquelle (31) im Kurzschlussbetrieb erzeugte Strom wird über die positive Kupferschiene der Ladesäule (10) im Kreis geleitet und mit einem dem gezeigten Leistungsmessgerät (33) zugeordneten Stromsensor gemessen. Die Potentiale der Spannung werden an beide Kupferschienen angelegt, aber bei der Zurückführung der Spannung wird nur ein Potential zurückgeführt, sodass an beiden Ausgängen der Stromquelle (31) das gleiche Potential anliegt. Ein Leistungsmessgerät (*power meter,* 33) im Prüfstand (30) greift ein Potential am Eingang (UE+, UE-) der Ladesäule (10 - Figur 2) und das andere Potential an deren Ausgang (CCS1+, CCS1-, CCS2+, CCS2-) ab.

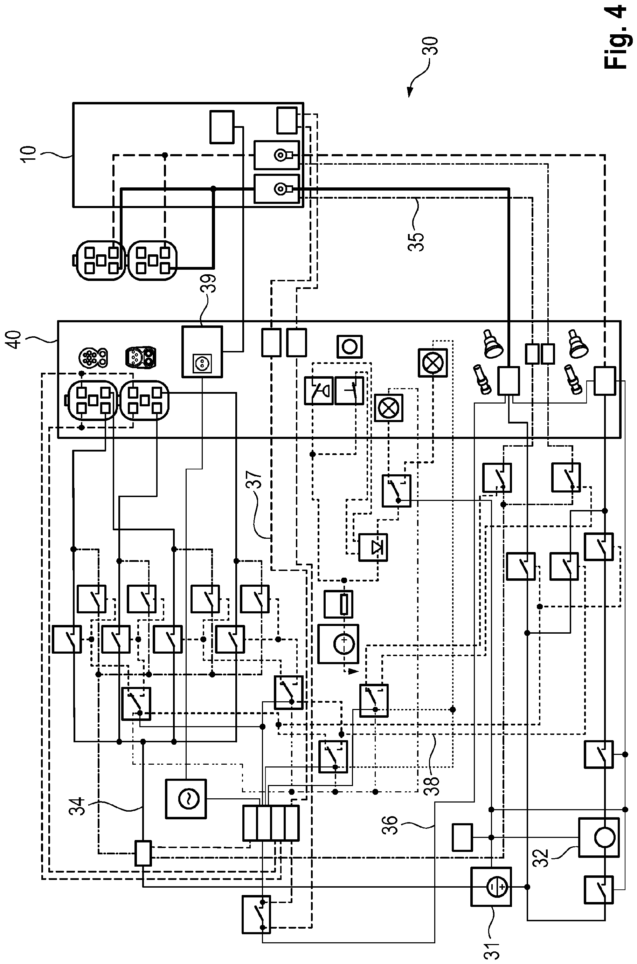

Detaillierter Messaufbau und Sicherheitskonzept des Prüfstandes (30) sind der Figur 4 zu entnehmen. Wie die Abbildung erkennen lässt, umfasst der Prüfstand (30) in der vorliegenden Ausführungsform sieben Leistungsschütze (S0-S6) zum Schalten der Leistung (34) sowie sechs Hochvoltrelais (M1-M6) zum Schalten der Hochvoltmessung (35). Durch diesen Messaufbau und eine gemeinsame Schaltsteuerung (38) der Leistungsschütze (S0-S6) und Hochvoltrelais (M1-M6) können alle für die Prüfung einschlägigen Spannungen und Ströme leistungslos gemessen werden. Die Anpassung dieses Konzeptes an den GB/T-Ladestandard ist durch den Einsatz weiterer Schütze und Relais möglich.

Wie die obigen Ausführungen verdeutlichen, wird erfindungsgemäß der Pluspol (DC+) sowohl der Stromquelle (31) als auch der Spannungsquelle (32) mit der Schutzerde (*protective earth,* PE) verbunden. In diesem Fall ist das Leistungsmessgerät (33) oberspannungsseitig (*high side*) installiert. So entsteht ein sogenanntes TN-Netz oder -System am Ausgang der Quellen (31, 32), was sich als besonders vorteilhaft erweist und insbesondere die Anforderungen an die Stromquelle (31) reduziert. Auf diese Weise erlaubt die erfindungsgemäße Konfiguration den Einsatz einer Stromquelle (31), deren Isolationsfähigkeit gegenüber der Schutzerde eine Spannung von 600 V typischerweise nicht übersteigt und somit deutlich hinter der für eine leistungsbehaftete Messung erforderlichen Prüfspannung von 1000 V zurückbleibt. Derlei Hochstromquellen mit Isolationsfähigkeit im Kleinschutzspannungsbereich sind kompakt, im Handel verfügbar und vergleichsweise kostengünstig.

Ein TN-Netz für eine unterspannungsseitige (*low side*) Konfiguration der Messung kann auf entsprechende Weise geschaffen werden. Hierzu ließen sich -je nach gewünschter Stromrichtung oder Spannungsvorzeichen - beispielsweise der Minuspol (DC-) der Stromquelle (31) und der Pluspol (DC+) der Spannungsquelle (32) gemeinsam mit der Schutzerde verbinden oder umgekehrt.

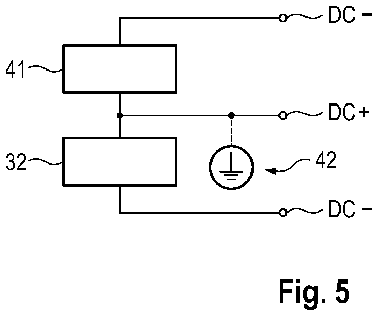

Figur 5 veranschaulicht ein alternatives Konzept ohne PE-Bezug auf der Grundlage eines IT-Netzes. Ein solches Konzept würde neben aufwändiger Leistungselektronik (41) jedoch einen zusätzlichen Isolationswächter (42) erfordern. Dieser Vergleich unterstreicht den erfindungsgemäß erzielbaren Kostenvorteil.

## Patentansprüche

1. Verfahren zum Prüfen eines DC-Zählers (11, 12) in einer Ladesäule (10), **gekennzeichnet durch** folgende Merkmale:
- eine Stromquelle (31) und eine Spannungsquelle (32) werden ausgangsseitig zu einem TN-System verbunden,
- mittels der Stromquelle (31) wird in einem Kurzschluss Strom in eine erste Stromschiene (DC+) der Ladesäule (10) und über ein Ladekabel (CCS2-, CCS2+) der Ladesäule (10) zurück zur Stromquelle (31) geleitet,
- mittels der Spannungsquelle (32) wird in einem Leerlauf eine Spannung zwischen der ersten Stromschiene (DC+) und einer zweiten Stromschiene (DC-) der Ladesäule (10) angelegt und
- ein **durch** den DC-Zähler (11, 12) anhand einer Messung des Stromes und der Spannung (15) gewonnener Leistungsmesswert wird mittels eines Leistungsmessgerätes (33) überprüft.

2. Verfahren nach Anspruch 1,
**gekennzeichnet durch** folgende Merkmale:
- die Messung des Stromes erfolgt mittels einer Sensoreinheit (11) des DC-Zählers (11, 12) auf der ersten Stromschiene (DC+) und
- die Messung der Spannung erfolgt mittels einer die Sensoreinheit (11) mit der zweiten Stromschiene (DC-) verbindenden Leitung (16).

3. Verfahren nach Anspruch 2,
**gekennzeichnet durch** folgende Merkmale:
- die Messung wird mittels einer Kommunikationseinrichtung (14) der Ladesäule (10) an eine Steuereinheit (12) des DC-Zählers (11, 12) übermittelt und
- der Leistungsmesswert wird von der Steuereinheit (12) **durch** Multiplizieren des Stromes und der Spannung gewonnen.

4. Prüfstand (30) für eine Ladesäule (10),
**gekennzeichnet durch** folgende Merkmale:
- der Prüfstand (30) umfasst eine Stromquelle (31), eine Spannungsquelle (32) und ein Leistungsmessgerät (33),
- die Stromquelle (31) und Spannungsquelle (32) sind ausgangsseitig zu einem TN-System verbunden und
- der Prüfstand (30) ist dazu eingerichtet, die Ladesäule (10) in einem Verfahren nach einem der Ansprüche 1 bis 3 zu prüfen.

5. Prüfstand (30) nach Anspruch 4,
**gekennzeichnet durch** folgendes Merkmal:
- der Prüfstand (30) ist ferner dazu eingerichtet, mittels des Leistungsmessgerätes (33) während einer Hochvoltmessung (35) zwischen Eingang (UE+, UE-) und Ausgang (CCS1+, CCS1-, CCS2+, CCS2-) der Ladesäule (10) eine von der Stromquelle (31) abgegebene Leistung (34) zu messen.

6. Prüfstand (30) nach Anspruch 5,
**gekennzeichnet durch** folgendes Merkmal:
- der Prüfstand (30) umfasst ferner Leistungsschütze (S0-S6) zum Schalten der Leistung (34) und Hochvoltrelais (M1-M6) zum Schalten der Hochvoltmessung (35) und
- der Prüfstand (30) ist ferner dazu eingerichtet, anhand interner Messungen (37) eine automatische Ablaufsteuerung (36) und Schaltsteuerung (38) der Leistungsschütze (S0-S6) und Hochvoltrelais (M1-M6) vorzunehmen.

7. Prüfstand (30) nach Anspruch 6,
**gekennzeichnet durch** folgende Merkmale:
- der Prüfstand (30) weist eine Frontplatte (40) auf und
- die Frontplatte (40) enthält eine in die Ablaufsteuerung (36) eingebundene Spannungsversorgung (39) für die Ladesäule (10).

8. Prüfstand (30) nach Anspruch 7,
**gekennzeichnet durch** folgende Merkmale:
- die Frontplatte (40) enthält mindestens eine Ladebuchse und
- die Ladebuchse ist dazu eingerichtet, einen Ladestecker des Ladekabels (CCS2-, CCS2+) aufzunehmen.

9. Computerprogramm, welches dazu eingerichtet ist, alle Schritte eines Verfahrens nach einem der Ansprüche 1 bis 3 durchzuführen.

10. Maschinenlesbares Speichermedium mit einem darauf gespeicherten Computerprogramm nach Anspruch 9.

## Claims

1. A method for testing a DC counter (11, 12) in a charging column (10), **characterised by** the following features:
- a current source (31 ) and a voltage source (32) are connected to a TN system on the output side,
- by means of the current source (31), current is conducted in a short circuit into a first busbar (DC+) of the charging column (10) and via a charging cable (CCS2-, CCS2+) of the charging column (10) back to the current source (31),
- by means of the voltage source (32), a voltage is applied in an idle state between the first busbar (DC+) and a second busbar (DC-) of the charging column (10), and
- a power reading obtained by the DC counter (11, 12) from a measurement of the current and the voltage (15) is checked by means of a power meter (33).

2. The method according to claim 1, **characterised by** the following features:
- the measurement of the current is carried out by means of a sensor unit (11) of the DC counter (11, 12) on the first busbar (DC+), and
- the measurement of the voltage is taken by means of a lead (16) connecting the sensor unit (11) to the second busbar (DC-).

3. The method according to claim 2, **characterised by** the following features:
- the measurement is transmitted to a control unit (12) of the DC counter (11, 12) by means of a communication device (14) of the charging column (10), and
- the power reading is obtained from the control unit (12) by multiplying the current and the voltage.

4. A test bench (30) for a charging station (10), **characterised by** the following features:
- the test bench (30) comprises a current source (31),' a voltage source (32), and a power meter (33),
- the current source (31) and the voltage source (32) are connected to a TN system on the output side, and
- the test bench (30) is configured so as to test the charging column (10) in a method according to any one of claims 1 to 3.

5. The test bench (30) according to claim 4, **characterised by** the following feature:
- the test bench (30) is further configured so as to measure, by means of the power meter (33), a power (34) output from the current source (31) during a high-voltage measurement (35) between the input (UE+, UE-) and output (CCS1+, CCS1-, CCS2+, CCS2-) of the charging column (10).

6. The test bench (30) according to claim 5, **characterised by** the following feature:
- the test station (30) further comprises contactors (S0-S6) for switching the power (34) and high-voltage relays (M1-M6) for switching high-voltage measurement (35), and
- the test bench (30) is further configured so as to perform an automatic sequence control (36) and switching control (38) of the contactors (S0-S6) and high-current relays (M1-M6) based on internal measurements (37).

7. The test bench (30) according to claim 6, **characterised by** the following features:
- the test bench (30) comprises a faceplate (40), and
- the faceplate (40) contains a current supply (39) for the charging column (10) incorporated into the sequence control (36).

8. The test bench (30) according to claim 7, **characterised by** the following features:
- the faceplate (40) contains at least one charging bushing, and
- the charging bushing is configured so as to receive a charging plug of the charging cable (CCS2-, CCS2+).

9. A computer programme configured so as to perform all steps of a method according to one of claims 1 to 3.

10. A machine-readable storage medium having a computer programme according to claim 9 stored thereon.

## Revendications

1. Procédé de contrôle d'un compteur CC (11, 12) d'une borne de recharge (10), **caractérisé en ce que** :
- une source d'intensité (31) et une source de tension (32) sont reliées, côté sortie, à un système TN,
- à l'aide de la source d'intensité (31), en fonctionnement en court-circuit, une intensité de courant est renvoyée vers la source d'intensité (31) dans une première barre conductrice (DC+) de la borne de recharge (10), par le biais d'un câble de charge (CCS2, CCS2+) de la borne de recharge (10),
- à l'aide de la source de tension (32), en fonctionnement en circuit ouvert, une tension est appliquée entre la première barre conductrice (DC+) et une deuxième barre conductrice (DC-) de la borne de recharge (10), et
- une valeur de mesure de puissance obtenue par le compteur DC (11, 12) à l'aide d'un mesurage de l'intensité et de la tension (15) est contrôlée au moyen d'un wattmètre (33).

2. Procédé selon la revendication 1, **caractérisé en ce que** :
- le mesurage de l'intensité s'effectue à l'aide d'une unité de détection (11) du compteur DC (11,12) sur la première barre conductrice (DC+), et
- le mesurage de la tension s'effectue à l'aide d'une ligne (16) reliant l'unité de détection (11) à la deuxième barre conductrice (DC-).

3. Procédé selon la revendication 2, **caractérisé en ce que** :
- la mesure est transmise à une unité de commande (12) du compteur CC (11, 12) à l'aide d'un dispositif de communication (14) de la borne de recharge (10), et
- la valeur de mesure de puissance est obtenue par l'unité de commande (12) par multiplication de l'intensité et de la tension.

4. Banc d'essai (30) pour une borne de recharge (10), **caractérisé en ce que** :
- le banc d'essai (30) comprend une source d'intensité (31), une source de tension (32) et un wattmètre (33),
- la source d'intensité (31) et la source de tension (32) sont reliées, côté sortie, à un système TN, et
- le banc d'essai (30) est conçu pour contrôler la borne de recharge (10) dans le cadre d'un procédé selon l'une des revendications 1 à 3.

5. Banc d'essai (30) selon la revendication 4, **caractérisé en ce que** :
- le banc d'essai (30) est conçu en outre pour mesurer une puissance (34) délivrée par la source d'intensité (31), à l'aide du wattmètre (33) lors d'un mesurage de haute tension (35) entre l'entrée (UE+, UE-) et la sortie (CCS1+, CCS1-, CCS2+, CCS2-) de la borne de recharge (10).

6. Banc d'essai (30) selon la revendication 5, **caractérisé en ce que** :
- le banc d'essai (30) comprend en outre des contacteurs de puissance (S0-S6) pour enclencher la puissance (34) et des relais à haute tension (M1-M6) pour enclencher le mesurage de haute tension (35), et
- le banc d'essai (30) est conçu en outre pour entreprendre, à l'aide de mesurages internes (37), une commande séquentielle (36) et une commande des enclenchements (38) automatiques des contacteurs de puissance (S0-S6) et des relais à haute tension (M1-M6).

7. Banc d'essai (30) selon la revendication 6, **caractérisé,en ce que** :
- le banc d'essai (30) présente une plaque frontale (40), et
- la plaque frontale (40) contient une alimentation (39) intégrée à la commande séquentielle (36) et destinée à la borne de recharge (10).

8. Banc d'essai,(30) selon la revendication 7, **caractérisé en ce que** :
- la plaque frontale (40) contient au moins une prise de charge, et
- la prise de charge est conçue pour recevoir une fiche de charge du câble de charge (CCS2-, CCS2+).

9. Programme informatique conçu pour exécuter toutes les étapes d'un procédé selon l'une des revendications 1 à 3.

10. Support d'enregistrement lisible par machine, sur lequel est enregistré un programme informatique selon la revendication 9.
